# EUROPEAN PATENT APPLICATION

(11) **EP 4 767 829 A1**
(43) Date of publication of application: **01.07.2026**
(21) Application number: 24858847.7
(22) Date of filing: 28.05.2024
(51) Int. Cl.: A23G 1/02, A23G 1/30, A23L 5/20

(54) **METHOD FOR PROCESSING CACAO PRODUCTS WITH IMPROVED FLAVOUR, AROMA AND RHEOLOGY**

(30) Priority: 26.08.2023 CO 23011168
(71) Applicant: Sucesores de Jose Jesus Restrepo & Cia. S.A. Casa Luker S.A., Manizales (CO)
(72) Inventor: CASTAÑEDA MONSALVE, Ivan, Manizales (CO); CHICA MORALES, Maria Jose, Bogota D.C. (CO); FLOREZ GONZALEZ, Sergio Leonardo, Bogota D.C. (CO); GOMEZ BUITRAGO, Francisco Javier, Manizales (CO); OLARTE NOREÑA, Hector Hugo, Bogota D.C. (CO); RODRIGUEZ LÓPEZ, Claudia Milena, Bogota D.C. (CO); ROJAS VELASQUEZ, Ana Gabriela, Manizales (CO)
(74) Representative: Isern Patentes y Marcas S.L.
(86) International application number: PCT/IB2024/055184
(87) International publication number: WO 2025/046316

(57) **Abstract**

The present invention relates to a method for improving the organoleptic and rheology of cocoa products, as well as reducing the heavy metals present in the product. The method described uses treatment with acid chelating agents and is applicable to cocoa and its derivative products, among other food products. This method comprises: a) mixing a cocoa product with an aqueous solution in a proportion between 10 and 99% w/w; b) adding an acid chelating solution in a concentration between 0.003% and 0.3% w/w; c) maintaining the solution obtained at a temperature between 20°C and 70°C, stirring for between 2 and 8 hours or until the conductivity of the solution is in the range between 6000µS/cm-7000µS/cm; and d) separating, washing, and drying the treated product. This process reduces conching times in the preparation of cocoa products. In terms of flavor, the cocoa product obtained has, among other modifications, a reduction in residual bitterness and greater sweetness, according to the sensory panel's perception. It also allows for a reduction in the rheology of the products obtained.

## Description

### Technical field of the invention

The present invention relates to the technical field of food processing. More particularly, it relates to a process for improving the organoleptic and rheology of cocoa products, as well as achieving a reduction in the heavy metals present in the product. The process described employs treatment with acid chelating agents and is applicable to cocoa and its derivative products, among other food products.

### Background of the invention

The sweet taste of chocolate, with hints of acidity and bitterness, as well as its exquisite aroma, are the result of multiple attributes of the cocoa bean and the way it is processed.

The literature reports that some factors affecting the flavor quality of cocoa beans are: the genotype and origin of the cocoa tree; the effect of post-harvest treatment of cocoa on the flavor quality of the bean: pre-conditioning of the pulp, fermentation, and drying are determining factors. Other factors related to the effect of industrial processing of the cocoa bean, such as roasting [1].

In addition, although the chemical composition of the soil also affects the quality of the bean, there are no reports on its effect on improving the flavor quality of the bean [1].

Likewise, fine flavor cocoa, also known as FFC, is a product of great interest in the market. This type of product can be obtained, for example, by adequately controlling the fermentation conditions of the bean. Studies using sensory profiles, volatile compound content, and non-targeted metabolomics show that chocolate quality is influenced by fermentation time. At 96 hours, the overall quality is strongly influenced by fine attributes such as fruitiness, floral notes, spices, and nuts. Likewise, the metabolomic fingerprint of cocoa beans (related to peptides, sugars, amino acids, and phenolic compounds) and the volatile fingerprint of chocolate also showed good results at this fermentation time [2].

The literature also reports some methods related to improving the flavor of cocoa beans: Patent document ES2700165 (T3) reports a cocoa product consisting of cocoa powder, cocoa liquor, and cocoa butter, which have a fruity flavor and fruity aroma compounds. In which the cocoa product comprises amounts of fruity aroma compounds of at least 2.5 µg/kg of ethyl-2-methylpropanoate, at least 7.5 µg/kg of ethyl-2-methylbutanoate, at least 10 µg/kg of ethyl-3-methylbutanoate, at least 50 µg/kg of phenylacetaldehyde, and at least 100 µg/kg of furaneol. This product is obtained by a process that mixes cocoa tips, dehusked cocoa beans, or a combination thereof with an acid and water. The acid is selected from the group consisting of gluconic acid delta lactone, phosphoric acid, ascorbic acid, sodium bisulfate, and combinations thereof. The acidified cocoa products are roasted to obtain a more aromatic and fruity flavor.

Document WO2008157039 relates the higher polyphenol content and particle size of polyphenols to the improved flavor of a cocoa extract, this content being at least 300 milligrams per gram of ground extract, where the average particle size of the ground extract is less than 15 micrometers and/or where 90% by volume of the particles are less than 30 micrometers.

Patent EP2071961 discloses a process for obtaining cocoa powder extracts with improved aroma and flavor, as they are rich in polyphenols. This process involves treating the seeds prior to fermentation, where controlled stages of this process and extraction with water-ethanol polar solvent are carried out. According to the authors, this process makes it possible to obtain an ethyl acetate cocoa extract rich in polyphenols, in which catechin is present at 40 to 100 mg/g, epicatechin is present at 200 to 500 mg/g, procyanidin B1 is present at 5 to 20 mg/g, and procyanidin B2 is present at 80 to 250 mg/g, with cocoa particles having a particle size between 500 and 50 µm.

Other approaches use potassium salts to improve flavor, as described in document MX2016015758, according to which a flavor composition containing at least one, two, or more types of potassium salt is added to improve the flavor profile of alkalized cocoa in edible compositions, including sweet products such as confectionery.

On the other hand, heavy metal content can affect consumer health. Therefore, heavy metals present in food are a major concern worldwide. Overexposure can cause fatigue, headache, abdominal pain, and fever, among other symptoms. It also causes damage to different organs such as the kidneys or lungs and generates DNA damage and conformational changes that can lead to cell cycle modulation, carcinogenesis, or apoptosis [3].

Several plants of agricultural interest are bioaccumulators of heavy metals, including cadmium, and have a wide range of effects on their metabolism and growth, as well as tolerance to the toxicity of these metals [4].

For example, the cacao tree, *Theobroma cacao,* is a cadmium bioaccumulator. In soils rich in this heavy metal, the plant will begin to bioaccumulate it in its leaves, pods, and seeds. The cocoa bean, which is divided into shell and nibs, is eventually transformed into chocolate, and that cadmium could be present in different derivative products [5]. Therefore, it is important to know and control the levels of cadmium in the different parts of the seed and in cocoa derivative products.

According to the WHO, the human body can tolerate around 0.025 mg per kg of body weight [6]. Additionally, current European food regulations (Codex) set the following limits for cadmium content in chocolate: for chocolates with <= 30% cocoa content, the cadmium limit is 0.1 ppm; for chocolates between 30% and 50% cocoa content, the cadmium limit is 0.3 ppm; and for chocolates with more than 50% cocoa content, the cadmium limit is 0.8 ppm. Furthermore, for cocoa powder, the cadmium limit is 0.6 ppm [7]. In Latin America, cadmium levels can range from 1 ppm to 7 ppm [8].

Thus, in the search for methodologies to reduce heavy metals in food, different approaches have been developed to solve this problem:
Patent application WO2010063021 shows a pre-washing method using an alkaline solution at different temperatures, applied in the post-harvest stage, to improve the quality of cocoa beans and the products made from them by removing iron (Fe), aluminum (Al), silicon (Si), ochratoxin A, and potassium (K). This method is based on a different principle than the present invention and does not report any improvement in product flavor.

The document by Wang et al. (2023) summarizes different methodologies for removing cadmium, applied especially in rice. Physical methods such as soaking in water are described. Chemical methods such as using alkaline solutions that break covalent bonds releasing cadmium, or using acidic solutions to form a stable compound with cadmium. Other chemical methods include: surfactant adsorption, deep washing with eutectic solvents, and complexation. Biological methods mentioned include fermentation by microorganisms [9]. Again, methods for removing heavy metals are reported here, but these are not associated with improved food flavor.

Patent US937502 refers to a process for producing cocoa shells in powder form as a food ingredient. The document mentions that the reduction of the concentration of metal contaminants in cocoa shells is achieved through the use of a chelating agent comprising an organic acid or any alkali metal or alkaline earth metal salt thereof. The chelating agents are selected from an organic acid that may contain at least two carboxylic groups, such as tartaric acid, or three carboxylic groups, such as citric acid. No improvement in flavor is reported with the treatment performed.

Finally, for cocoa products in their different forms, the chemical compounds that cause defects in the bean's aroma and flavor have been characterized. These defects are related to the presence of contaminants as well as alterations in the cultivation, environment, and processing of the bean [10].

As can be seen, the background to the invention includes developments that report an improvement in flavor or aroma, achieved by methods that specifically concentrate cocoa polyphenols. However, none of these methods achieves an improvement in flavor and a reduction in heavy metals present in cocoa.

Therefore, it is necessary to develop processes with cocoa products that achieve improvements in flavor and other organoleptic properties but also contribute to the reduction of heavy metals.

### Brief description of the invention

The present invention solves this problem by providing a method that uses acid chelating agents and improves the flavor and rheology of cocoa products, while reducing the concentration of heavy metals, such as lead, cadmium, and zinc, in the product obtained.

Specifically, the method reduces the levels of the compounds 2-pentanol, benzaldehyde, 2-methylpropanal, nonanal, 2-nonanone, 2-methylpropanoic acid, 2-pentyl acetate, and phenethyl alcohol in the cocoa product profile, thereby reducing residual acidic, bitter, pungent, green, woody, and rancid flavor notes in cocoa products in any of their forms.

It also reduces the presence of cadmium by 30%-50% in cocoa products and lead by 40%-70%, which also impacts the flavor, aroma, and rheology of the treated cocoa product.

This method comprises: a) mixing a cocoa product with an aqueous solution in a proportion of between 10 and 99% w/w; b) adding an acid chelating solution in a concentration of between 0.003% and 0.3% w/w; c) maintaining the solution obtained in the previous step at a temperature between 20°C and 70°C, stirring for between 2 and 8 hours or until the conductivity of the solution is in the range between 6000µS/cm-7000µS/cm; and d) separating, washing, and drying the treated product.

This process allows a reduction in conching time during the production of cocoa products. In terms of flavor, the cocoa product obtained has reduced residual bitterness and greater sweetness, according to the sensory panel's perception. It also reduces the rheological properties of the products obtained, which have a viscosity between 7.8 Pa·s and a yield stress of 1.8 Pa, meaning that they have a reduction of 20% and 48%, respectively.

Furthermore, the invention provides a cocoa product with improved flavor that has profiles with lower concentrations of the compounds 2-pentanol, benzaldehyde, 2-methylpropanal, nonanal, 2-nonanone, 2-methylpropanoic acid, 2-pentyl acetate, and phenethyl alcohol, as well as lower concentrations of heavy metals. The cocoa food comprising the cocoa product and some additives is also disclosed.

### List of Figures

The invention can be better understood by following the descriptions and drawings, given by way of example and without limiting the scope of protection.
**Figure 1****.** Percentages of cadmium removal from cocoa nibs at different concentrations of acid chelating agent. Working conditions: room temperature, constant agitation, and a 1:4 ratio.
**Figure 2****.** Percentages of cadmium removal from cocoa nibs at different stirring states (mixing and static). Working conditions: room temperature, concentration of 0.01[M], and ratio of 1:4.
**Figure 3****.** Percentages of cadmium removal from cocoa nibs at different treatment temperatures. Working conditions: concentration of 0.5[mM], ratio 1:2 with 10 kg of cocoa nibs and constant stirring.
**Figure 4****.** Percentages of cadmium removal from cocoa beans at different ratios of cocoa product/acid chelating solution. Working conditions: concentration of 0.5[mM], temperature 60°C with 10 kg of cocoa nibs and constant agitation.

### Detailed description of the invention

### Process of the invention

The invention discloses a process for improving the flavor, aroma, and rheology of cocoa products. The process, which employs acidic chelating molecules, allows the removal of heavy metal ions and the adjustment of the profile of compounds related to organoleptic perception and the modification of the rheology of the cocoa product.

These chelating molecules interact with metals in the food sample. In this way, metals can be extracted from a food matrix, such as cocoa products, into a separate solution. Likewise, chelating molecules can modify the profile of flavor and odor compounds in cocoa and compounds that affect its rheology, such as the following compounds: 2-pentanol, benzaldehyde, 2-methylpropanal, nonanal, 2-nonanone, 2-methylpropanoic acid, 2-pentyl acetate, and phenethyl alcohol, which decrease in the profile of the cocoa product obtained.

The method according to the invention is as follows:
a. mixing a cocoa product with an aqueous solution in a proportion between 10 and 99% w/w;
b. adding an acid chelating solution in a concentration between 0.003% and 0.3% w/w;
c. maintaining the solution obtained in the previous step at a temperature between 20°C and 70°C for between 2 and 8 hours or until the conductivity of the solution is in the range between 6000µS/cm and 7000µS/cm; and
d. separating, washing, and drying the treated product.

In this document, the term cocoa product refers to cocoa beans, cocoa shells, cocoa nibs, cocoa powder, cocoa liquor, cocoa derivatives, and mixtures thereof. The process described can be performed for any of these forms of cocoa product.

These cocoa products may be in any state. For example, cocoa beans may be with or without pulp, pre-fermented or fermented. Likewise, cocoa shells may be pre-treated for disinfection, treated with enzymes, ground, or in any other state.

The acidic chelating solution used in the process is selected from nitrilotriacetic acid (NTA), diethylenetriaminepentaacetic acid (or diethylenetriaminepentaacetate) (DTPA), ethylenediaminetetraacetic acid (EDTA), disodium EDTA, calcium disodium EDTA, and mixtures thereof. Likewise, the treatment described in this invention can be extended to other chelating molecules with carboxyl groups on the periphery.

In one embodiment of this invention, EDTA (ethylenediaminetetraacetic acid) (CAS: 60-00-4) is the acidic chelating molecule involved in the process.

The acidic chelating solution may be present at a concentration between 0.003% and 0.3% w/w, preferably between 0.1mM and 10mM, and more preferably between 0.01% and 0.03%.

When combining or mixing the acidic chelating solution and the aqueous solution, the proportions of cocoa product and chelating solution are between 0.1:5, preferably between 1:3, and more preferably between 1:2 and 1:1.5.

During the process, temperature ranges between 10 and 80°C, 20 and 70°C, and more preferably between 20 and 50°C can be used.

The mixture of chelating solution and cocoa product solution can be kept at a temperature between 20°C and 70°C and stirred, preferably constantly, for between 2 and 8 hours or until the conductivity of the solution is within a range of 6000µS/cm-7000µS/cm.

It is important to note that, in the process of the invention, it is not necessary to use different phases or stages with specific temperatures, but rather the temperature can be maintained within the same range or be lowered or raised only at the beginning or end of the process.

The separation step may be carried out by filtration, vibrating or static sieving, centrifugation, ionization processes, pulsed treatments, foam formation, amalgamation, precipitation, chelation, flocculation, sequestration of ionic agents, magnetic or electromagnetic fields, combinations thereof, or any other method known in the art.

In any case, separation is performed for particles larger than 3 mm, preferably between 4 and 8 mm, and more preferably between 5 and 6 mm.

The washing and drying of the treated product can be carried out by any of the techniques known in the state of the art. For example: soaking in water, immersion in water, use of food-grade surfactant; and drying of these on cement drying racks, canopies, fluidized bed dryers, roasting equipment, among others.

### Characterization of the product obtained

The product obtained through the process of the invention is characterized by having a lower concentration of heavy metals, preferably cadmium and lead, than that presented in the initial cocoa product. In general terms, the product has a heavy metal content, particularly cadmium, that is 30-50% lower than the initial product and a lead content that is 40-70% lower than the initial untreated product.

It should be noted that the cadmium, lead, or other heavy metal content may vary depending on the type of cocoa product used as the starting material and its physical form, since the process yields different results when applied to whole cocoa beans, cocoa powder, or a spreadable cocoa product.

The improved cocoa product of the invention has concentrations of cadmium, lead, and zinc compounds in a ratio between 1:0.03:13 to 1:0.02:12.

The rheological properties of the product obtained were measured for the treated cocoa products in liquid form, where an increase in the percentage of fat was observed. The products obtained have a viscosity between 5-10 Pa·s, more preferably between 7.8-7 Pa·s, and a yield stress between 1 and 3 Pa, more preferably between 1.8-2 Pa. This viscosity and yield stress value means that they have a decrease of 20% and 48%, respectively, compared to the untreated liquid cocoa product.

Regarding the fat percentage, there is an increase between 1 and 10%, more preferably between 2 and 6%. This increase, in addition to the content of natural fat molecules, is related to the loss of solids during the removal process. This change in the lipid profile allows the cocoa product to have a lower melting point, changing its rheological properties and generating better fluidity.

On the other hand, with regard to the improvement in aroma, the process and the product obtained by it manage to reduce the level of volatile compounds in the alcohol group, especially phenethyl alcohol, associated with woody and pungent odor attributes.

Complementarily, according to the results obtained in the sensory panel (see example 7), the process carried out and the improved cocoa product obtained through this process achieve a product where the acidity, bitterness, and astringency of the cocoa are reduced by 2, 2, and 1 units, respectively, based on a scale of 0 to 10. Likewise, defects such as green, moldy, and others (woody, poorly fermented, rancid, contaminated) decrease by up to 3 units, or to a rating of 0 units.

This means that there is mainly a decrease in the compounds: (Z)-3-hexenol, (E,Z)-2,6-nonadienol responsible for the green aroma and flavor (straw or hay); 2-methylisoborneol, 2,4,6-trichloroanisole, and 2-isopropyl-3-methoxypyrazine, which are responsible for the moldy and musty odor and flavor.

Likewise, there is a reduction in other compounds responsible for odor and flavor characteristics in defective cocoa products, such as (E,E)-2,4-decadienal, responsible for rancid odor; 4-methylguaiacol and guaiacol, responsible for woody odor and smoky flavor; and 3-methyl-1-butanol, responsible for alcoholic flavor when the product is poorly fermented.

Other products obtained through the process carried out in the invention are:
- A food product with cocoa, with a cocoa product having improved flavor, aroma, and rheological properties according to the invention and (ii) a fat, an oil, and/or a syrup.
- Pharmaceutical cocoa product with improved flavor, aroma, and rheological properties according to the process disclosed in the invention, which also contains adjuvants, stabilizers, or any other pharmaceutically acceptable product.

Furthermore, based on the disclosure, it is evident that the process of the invention, and specifically the acid chelators, their salts, and crystals, achieve an improvement in the flavor, aroma, and rheology of cocoa products.

In the present invention, the improvement in flavor refers to the inhibition of defects and atypical flavors in cocoa, such as green, poorly fermented, moldy, rancid, contaminated, burnt, smoky, among others.

The improvement in aroma refers to the aroma perception in the treated cocoa product with a decrease in green, acetic, rancid, oxidized, burnt, smoky, contaminated aromas, among others.

Conching or homogenization refers to the process of refining the basic chocolate mass, which improves and harmonizes its flavor and makes it fluid.

### Examples

The following examples show the best way to carry out the invention, but do not limit it to these results. In the case of the technical area, the results only illustrate values that are comparable for a given variety, type of cocoa bean, and form of fermentation.

### Example 1. Process of the invention in cocoa nibs

The process for improving the organoleptic and rheological characteristics, as well as for removing cadmium, from cocoa nibs using EDTA as a chelating molecule is described.

The solution was prepared in concentrations between 0.1 [mM] and 100 [mM]. This was prepared in water at a room temperature of pH 7. This was stirred continuously on a magnetic stir plate for 15 minutes. For the test, 200 ml of the chelating solution was prepared.

Then, 50 g of cocoa nibs with a high cadmium content were added to the solution. This was kept under constant agitation using a head agitator between 500 and 1200 rpm. The reaction lasted 8 hours at room temperature.

Finally, the cocoa nibs were separated using a #10-14 mesh. They were washed with 500 ml of water to remove traces of the chelating molecule. Later, the cocoa nibs were dried at a temperature above 115°C with a final moisture content of 5%. The cadmium level was measured by atomic absorption in the cocoa nibs.

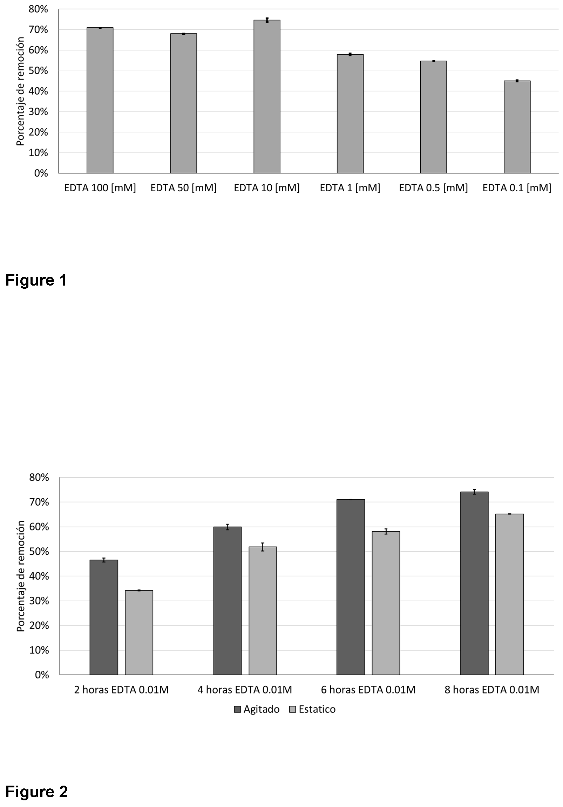

Figure 1 shows the results as a percentage of removal at different EDTA concentrations at different times. Each experiment was performed in triplicate.

This experiment shows an elimination efficiency of over 40% at all EDTA concentrations. Concentrations between 100 mM and 10 mM show an elimination percentage of close to 70%. Below a concentration of 10 mM, a decrease in elimination efficiency is evident.

The results regarding the rheological characteristics of the cocoa product obtained are shown in detail in Example 5.

### Example 2. Impact of agitation during the process of the invention

The impact of agitation during the process to improve the flavor, aroma, and rheology of cocoa products and reduce the concentration of heavy metals, such as cadmium, is described.

The solution was prepared at a concentration of 10 mM. The experiment was carried out with 50 g of cocoa nibs and 200 ml of chelating solution. Different experimental configurations were performed at different treatment times (2, 4, 6, and 8 hours). Two treatments were set up in parallel, one with constant agitation using a magnetic stirrer at room temperature and the other static at room temperature.

After treatment, the cocoa tip samples were separated using a metal mesh and washed with plenty of water. Finally, the cocoa nibs were dried at 115°C until a moisture content of 5% was obtained. All experiments were performed in triplicate.

Figure 2 shows the different percentages of removal of cocoa tips at different time points and agitation conditions.

In this embodiment, it is evident that constant agitation during the process results in greater cadmium removal over time.

### Example 3. Impact of temperature on the process of the invention

The impact of temperature during the treatment of cocoa nibs is indicated. For this test, a cadmium removal process was carried out on 10 kg of cocoa nibs. A 1:2 ratio of nibs to chelating solution was used, with a concentration of 10 mM EDTA, constant agitation, and treatment times of 8 hours.

Samples were taken at different treatment times to determine cadmium levels. The temperature ranged from 20°C to 70°C. In all cases, the solution was first prepared with chelating agent and preheated to the desired temperature. The solution was stirred for 15 minutes before adding the cocoa nibs. After treatment, the same separation and drying methodology described in examples 1 and 2 was used.

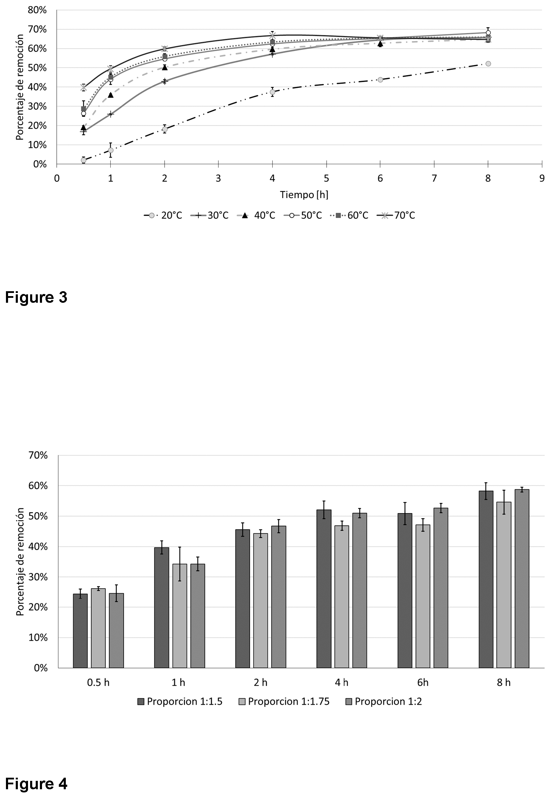

Figure 3 shows the cadmium removal behavior at different temperatures.

It can be seen that in this temperature range, the process can be carried out with the same yield and without affecting cadmium removal.

### Example 4. Effect of the ratio of cocoa nibs and chelating solution in the process of the invention.

The impact of using different proportions of nibs: chelating solution for the cadmium removal process is described.

Ratios of 1:2, 1:1.75, and 1:1.5 nibs:chelating solution were tested, respectively. All experiments were carried out at the same EDTA concentration (0.5 mM). The experiments were performed with 10 kg of cocoa nibs, and the amounts of solution varied according to the ratio studied.

First, the chelating solution is prepared according to the ratio. Then, 10 kg of cocoa nibs are added to the container where the solution was previously prepared. The treatments were carried out by stirring the solution with a stirrer at 60 rpm at 60°C for 8 hours. Sampling points were taken at 0.5, 1, 2, 4, 6, and 8 hours. The cocoa nibs were separated using a metal mesh, washed, and dried using the same methodology described in examples 1 and 2.

Figure 4 shows the removal percentages for each of the proportions studied. In all cases studied, similar removal efficiencies were obtained between treatments. In this way, it is possible to reduce water use while maintaining removal efficiencies of cadmium below 60%.

### Example 5. Profile of compounds and rheological characteristics of treated and untreated cocoa liquor

The cocoa liquor product, prepared from cocoa nibs that were treated with the process of the invention, was characterized.

For this test, the results of the parts per million (ppm) content of heavy metals (cadmium and lead) and the percentage by weight (%) of fat were compared.

Likewise, rheological characteristics such as viscosity (specifically, dynamic viscosity measured in Pascal-seconds [Pa·s]), yield stress, measured in Pascal, and water activity in the treated and untreated product were compared. The results can be seen in Table 1:

**Table 1. Parameters evaluated for treated and untreated cocoa liquor.**

| **Cocoa liquor** | | |
|---|---|---|
| **Parameters** | **Control liquor** | **Treated liquor** |
| Cadmium [ppm] | 1.8 | 0.93 |
| Lead [ppm] | 0.052 | 0.018 |
| Fat [%] | 51.59 | 54.91 |
| Viscosity [Pa·s] | 9.7604 | 7.813 |
| Yield stress [Pa] | 3.4469 | 1.8058 |
| Water activity | 0.128 | 0.141 |

As can be seen, the values of heavy metals, cadmium, and lead decreased significantly in the treated cocoa liquor. Cadmium decreased by 49.3%, while lead decreased by 65.3%.

Regarding the percentage of fat, we have an increase of approximately 3.3%. This increase, apart from fat, is related to the loss of solids during the removal process. This change in the lipid profile allows the cocoa to have a lower melting point, changing its rheological properties and thus generating better fluidity.

In terms of rheological characteristics, as can be seen, the treatment achieves a 20% decrease in viscosity and a 47.6% decrease in the yield stress. This implies shorter conching times in the cocoa transformation process and less butter added in the formulation of certain products that require better fluidity (coatings, spreads, among others).

This test shows improvements in the reduction of heavy metal content. In addition, there is an improvement in the perception of cocoa flavor, as well as a decrease in the rheology of the product.

### Example 6. Profile of compounds and rheological characteristics of treated and untreated cocoa coating

The cocoa coating was characterized in a similar way to the previous example, as shown in Table 2. This coating was prepared from cocoa nibs that were treated with the process of the invention.

**Table 2. Parameters evaluated for treated and untreated cocoa coating.**

| **Cocoa coating** | | |
|---|---|---|
| **Parameters** | **Control coating** | **Treated coating** |
| Cadmium [ppm] | 1.358 | 0.8435 |
| Particle size [µm] | 35 | 44 |
| Fat [%] | 42.91 | 47.25 |
| Viscosity [Pa·s] | 1.5 | 1.44 |
| Yield stress [Pa] | 5.24 | 2.64 |
| Moisture [%] | 0.2 | 0.21 |

The cadmium content decreased by 37.37% in the treated cocoa coating. As for fat, it increased by around 4% compared to the untreated sample. This apparent increase in fat is related to the loss of cocoa solids during treatment, which are lost throughout the process.

With regard to rheology, given the consistency required for the coating, the viscosity value is sought to be maintained, while the yield stress can be reduced for certain coatings that need to have a higher melting speed for their applications. In the present case, the yield stress decreases by 49.6%, which allows for a much more fluid sample, with possible applications for coating baths. Likewise, the addition of butter during formulation is reduced, thereby lowering manufacturing costs.

### Example 7. Sensory panel to evaluate flavor profiles of treated and untreated cocoa liquor

A sensory panel was conducted with certified tasters who evaluated the flavor profiles of untreated cocoa liquor samples and samples treated with different chelating agents, according to the process disclosed in the invention. The NTC 3929 standard was used to evaluate the different attributes.

The treatments performed are:
Treatment 1: EDTA concentration 0.5mM, 8 hours of treatment at room temperature;
Treatment 2: EDTA concentration 0.1mM, 4 hours of treatment at room temperature;
Treatment 3: 0.1 mM EDTA, 8 hours of treatment at room temperature; Treatment 4: 0.5 mM EDTA, 2 hours of treatment at 50°C; Treatment 5: 0.5 mM EDTA, 4 hours of treatment at 50°C.

The results shown in Table 3 show that the different treatments carried out using the invention process result in a decrease in the perceived sensitivity to cocoa, acid, bitter, green, and other flavors. Likewise, there is also a decrease in mouthfeel with the decrease in astringency in the treated cocoa liquor.

It should be noted that the decrease in acidity goes from being dominant to barely detectable, while astringency goes from being dominant to perceptible, thus allowing the product to achieve a higher quality rating.

In terms of product defects, such as the presence of mold, none of the treatments allow the growth of mold-type fungi or the perception of the flavor of this compound.

Likewise, defects such as greenness and others are further reduced until they are no longer perceived by the sensory panel. These attributes are related to contamination or atypical flavors in cocoa due to poor handling, poor fermentation process, or contamination by external agents.

**Table 3. Sensory attributes tested for samples of treated and untreated cocoa liquor.**

| **Sample Cocoa liquors** | **Sensory attributes** | | | | | |
|---|---|---|---|---|---|---|
| | **Cocoa** | **Acidity** | **Astringency** | **Bitterness** | **Fruity** | **Floral** |
| Cocoa liquor control | 6 | 4 | 5 | 7 | 0 | 0 |
| Treatment 1 | 5 | 1.5 | 3 | 5 | 0 | 0 |
| Treatment 2 | 4 | 1 | 4 | 5 | 0 | 0 |
| Treatment 3 | 4.5 | 2 | 4.5 | 6 | 0 | 0 |
| Treatment 4 | 3 | 1 | 3.5 | 4 | 0 | 0 |
| Treatment 5 | 3 | 2 | 4 | 4.5 | 0 | 0 |

| **Sample Cocoa liquors** | **Sensory attributes** | | | | |
|---|---|---|---|---|---|
| | **Nut** | **Mold** | **Green** | **Panela/Malt** | **Other** |
| Cocoa liquor control | 0 | 0 | 3 | 0 | 3 |
| Treatment 1 | 0 | 0 | 0 | 0 | 1 |
| Treatment 2 | 1.5 | 0 | 0 | 0 | 0 |
| Treatment 3 | 0 | 0 | 0 | 0 | 0 |
| Treatment 4 | 0 | 0 | 1 | 0 | 0 |
| Treatment 5 | 0 | 0 | 0 | 0 | 1 |

The green parameter refers to a defect in cocoa related to the presence of earthy, damp, or raw vegetable flavors due to poor cleaning of the beans. It is usually accompanied by aromas of vegetables, damp earth, acetic acid, among others.

It is concluded that all treatments have a positive effect on reducing sensory defects in cocoa. The most successful cases are treatments 3 and 4, which have a higher cadmium removal rate in the shortest possible time with the lowest amount of molecules in their treatment.

### Example 8. Profile of nutritional compounds, minerals, metals, and fatty acids in treated cocoa liquor

The process of improving flavor, aroma, and rheology is carried out on cocoa nibs as shown in examples 1 to 3. The cocoa samples come from Santander, Colombia, so the values found are only a reference, comparable only with the same type of bean, cocoa variety, and fermentation process. The control sample corresponds to historical reference values for cocoa liquor from that region.

Subsequently, the compound profile is determined for cocoa liquor samples derived from this treated cocoa product. The results are shown in Table 4.

**Table 4. Compound profile in treated and untreated cocoa liquor.**

| **Analysis performed** | **Treated cocoa liquor** | **Control cocoa liquor** |
|---|---|---|
| Total polyphenols | 4.1 g/100 g, which may come from catechin. | 5.6 g/100 g |

| **Nutritional analysis** | | |
|---|---|---|
| Insoluble dietary fiber | 13.1 ±1.2 g/100 g | 12.64 g/100 g |
| Soluble dietary fiber | 0.8 ± 0.3 g/100 g | 1.92 g/100 g |
| Dietary fiber | 13.6 ±1.3 g/100 g | 14.89 g/100 g |
| Protein (N x 6.25) | 12.3 ± 0.3 g/100 g | 11.31 g/100 g |

| **Determination of metals and other elements** | | |
|---|---|---|
| Cadmium | 2.35 ± 0.66 mg/kg | -- |
| Lead | 0.054 ± 0.02 mg/kg | -- |
| Zinc | 41.5 ± 7.6 mg/kg | 42.5 mg/kg |
| Calcium | 94.5 ± 10.8 mg/100 g | 62 mg/kg |
| Iron | 69.6 ± 11.8 mg/kg | -- |
| Potassium | 928 ± 75 mg/100 g | 767 mg/100 g |
| Aluminum | 40.1 ± 7.4 mg/kg | -- |
| EDTA | Not detected | Not detected |

| **Fatty acids** | | |
|---|---|---|
| Fats | 54.0 ± 1.1 g/100 g | 52 g/100 g |
| Saturated fatty acids | 32.88 ± 0.77 g/100 g | 32 g/100 g |
| Monounsaturated fatty acids | 17.08 ± 0.39 g/100 g | 17 g/100 g |

| **Analysis performed** | **Treated cocoa liquor** | **Control cocoa liquor** |
|---|---|---|
| Polyunsaturated fatty acids | 1.67 ± 5.39 g/100 g | 3 g/100 g |

The results allow us to identify that the invention process reduces the concentration of compounds such as soluble dietary fiber, polyunsaturated fatty acids, and total fat content. This could be related to the decrease in viscosity and yield stress. However, the values present in the treated cocoa liquor are very close to the historical values of cocoa liquors from the Santander region.

### Bibliographic references

[1] Kongor, J.E. et.al. (2016) Factors influencing quality variation in cocoa (Theobroma cacao) bean flavor profile - A review. Food Research International, 82: 44-52.
[2] Escobar, S. et.al. (2021) Fine cocoa beans production: Tracking aroma precursors through a comprehensive analysis of flavor attributes formation. Food Chemistry, 365: 130627.
[3] Genchi G, et.al. (2020) The Effects of Cadmium Toxicity. Int J Environ Res Public Health. Jun; 17(11): 3782.
[4] Ashfaque F., et.al. (2016) Influence of Heavy Metal Toxicity on Plant Growth, Metabolism, and Its Alleviation by Phytoremediation- A Promising Technology. Journal of Agriculture and Ecology Research International. 6(2): 1-19.
[5] Wade J, et.al. (2022) Drivers of cadmium accumulation in Theobroma cacao L. beans: A quantitative synthesis of soil-plant relationships across the Cacao Belt. PLoS ONE 17(2): e0261989.
[6] WHO (1980) Occupational exposure limits for heavy metals recommended for health reasons. Available at: https://apps.who.int/
[7] Codex Committee on Contaminants in Foods. Recommendations for cadmium limits in cocoa. Available at: https://food.ec.europa.eu/horizontal-topics/international-affairs/international-standards/codex-alimentarius/cccf_en
[8] Meter A., Atkinson R.J. and Laliberte B. (2019) Cadmium in cocoa from Latin America and the Caribbean - Analysis of research and potential solutions for mitigation. Bioversity International, Rome, October 2019.
[9] Wang, R. et.al. (2023) Cadmium in food: Source, distribution and removal. Food Chemistry, 405:134666.
[10] Januszewska, R. (2018) Hidden Persuaders in Cocoa and Chocolate. A Flavor Lexicon for Cocoa and Chocolate Sensory Professionals. Elsevier Inc. United Kingdom.

## Claims

1. Method for processing cocoa products with improved flavor, aroma, and rheology wherein
a) mixing a cocoa product with an aqueous solution in a proportion between 10 and 99% w/w;
b) adding an acidic chelating solution in a concentration between 0.003% and 0.3% w/w;
c) maintaining the solution obtained in the previous step at a temperature between 20°C and 70°C for between 2 and 8 hours or until the conductivity of the solution is in a range between 6000µS/cm-7000µS/cm; and
d) separating, washing, and drying the treated product.

2. Method for processing cocoa products of claim 1, wherein the cocoa product is selected from: cocoa beans, cocoa shells, cocoa nibs, cocoa powder, cocoa liquor, cocoa derivatives or mixtures thereof.

3. Method for processing cocoa products of claim 1, wherein the acidic chelating solution is selected from nitrilotriacetic acid (NTA), diethylenetriaminepentaacetate (DTPA), ethylenediaminetetraacetic acid (EDTA), disodium EDTA, calcium disodium EDTA, and mixtures thereof.

4. Method for processing cocoa products of claim 3, wherein the chelating solution is EDTA.

5. Method for processing cocoa products of claim 1, wherein that the aqueous solution has proportions of cocoa product and chelating solution between 1:2 and 1:1.5.

6. Method for processing cocoa products of claim 1, wherein the separation is performed for particles having a size greater than 500 µm.

7. Cocoa product with improved flavor, aroma, and rheology, wherein the cadmium content is 30-50% lower and the lead content is 40-70% lower than in the initial product.

8. Cocoa product of claim 7, wherein the concentrations of cadmium, lead, and zinc compounds are in a ratio of 1:0.03:13 to 1:0.02:12.

9. Cocoa product of claim 7, wherein the natural fat content increases between 1 and 10%.

10. Cocoa product of claim 7, wherein the viscosity is between 5-10 Pa·s.

11. Cocoa product of claim 7, wherein that the yield stress is between 1 and 3 Pa.

12. Cocoa product of claim 7, wherein the acidity, bitterness, and astringency of the cocoa are reduced by 2, 2, and 1 units, respectively, based on a scale of 0 to 10.

13. Cocoa product of claim 7, wherein the flavor and odor defects of the cocoa product obtained are reduced by up to 3 units, or to a rating of 0 units on a scale of 0 to 10.

14. Cocoa product of claim 13, wherein the flavor defects are selected from green, moldy, woody, poorly fermented, rancid, contaminated, oxidized, and mixtures thereof.

15. Cocoa product of claim 7, wherein the compounds selected from: 2-pentanol, benzaldehyde, 2-methylpropanal, nonanal, 2-nonanone, 2-methylpropanoic acid, 2-pentyl acetate, phenethyl alcohol, (Z)-3-hexenol, (E,Z)-2,6-nonadienol, 2-methylisoborneol, 2,4,6-trichloroanisole, 2-isopropyl-3-methoxypyrazine, (E,E)-2,4-decadienal, 4-methylguaiacol, guaiacol, 3-methyl-1-butanol, and mixtures thereof, are present in a lower concentration in the profile of the cocoa product obtained by the process of claim 1, compared to the natural product.

16. Cocoa-containing food wherein (i) an improved cocoa product according to claim 7 and (ii) a fat, oil and/or syrup.

17. Use of acid chelating agents, their salts and crystals to improve the flavor, aroma and rheology of food products.
